# EUROPEAN PATENT SPECIFICATION

(11) **EP 0 337 620 B1**
(45) Date of publication and mention of the grant of the patent: **25.08.1993**
(21) Application number: 89302863.9
(22) Date of filing: 22.03.1989
(51) Int. Cl.: F02D 13/02

(54) **Exhaust timing changing system**
Anordnung für veränderliche Auslasssteuerzeiten
Dispositif pour faire varier la durée d'échapement

(30) Priority: 25.03.1988 JP 69769/88
(43) Date of publication of application: 18.10.1989
(73) Proprietor: SUZUKI KABUSHIKI KAISHA, Shizuoka-Ken (JP)
(72) Inventor: Uchiyama, Akira, Inasa-Gun Shizuoka-Ken (JP)
(74) Representative: Dealtry, Brian

(56) References cited:
- EP-A- 0 246 093
- US-A- 4 364 346
- US-A- 4 388 894
- US-A- 4 397 272
- US-A- 4 539 547

## Description

This invention relates to a system for changing exhaust timing of a two-cycle engine particularly adapted to effectively perform a self-cleaning operation of an exhaust timing valve at the starting time of an engine operation (EP-A-246093).

Japanese Patent Laid-open (KOKAI) Publication No. 57-62917, filed on September 30, 1980 and published on April 16, 1982; Applicant: YAMAHA HATSUDOKI KABUSHIKI KAISHA concerns a conventional two-cycle engine.

In particular, it discloses an exhaust timing controlling device of a two-stroke cycle engine in which a recessed portion is formed to the upper surface near an exhaust port provided for an exhaust passage and opened to an inner peripheral surface of a cylinder of the engine. A valve member is accommodated in the recessed portion so as to project or retract therefrom, and the exhaust timing is changed by changing the height of the exhaust port by displacing the valve member from the retracting position to the projecting position. Such controlling is performed by an electric controller.

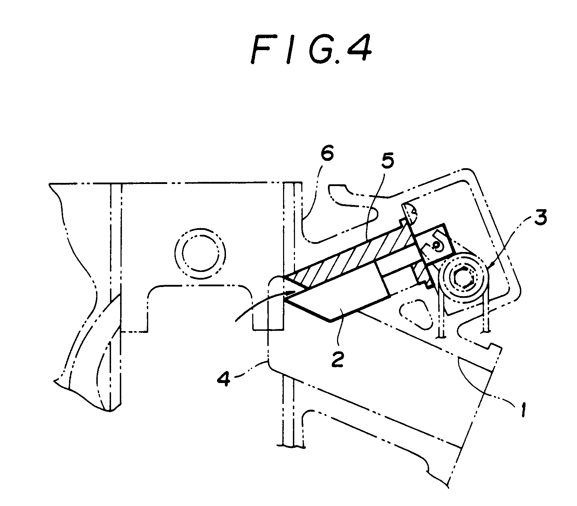

A two-cycle engine of conventional type is also shown in Fig.4. The two-cycle engine is provided with an exhaust timing valve 2 disposed for an exhaust passage 1 for taking the exhaust timing of the engine. The exhaust timing valve 2 is disposed so as to be movable forwardly and backwardly with respect to an exhaust port 4 with the timing in accordance with the revolution numbers of the engine by the actuation of an actuating mechanism 3 operatively coupled with a crank member. In detail, the exhaust timing valve 2 is forwardly moved towards the exhaust port 4 when the engine is rotated at a low or neutral speed to delay the exhaust timing and the exhaust timing valve 2 is on the contrary backwardly moved when the engine is rotated at a high speed to speed up the exhaust timing. The exhaust timing valve 2 of the character described above is moved along a valve guide member 5 which is secured to a cylinder block 6 by means of a bolt.

However, when the engine provided with the conventional exhaust timing changing system of the described type has been operated for a long period, there will cause a fear of sticking carbon or the like on the sliding surface of the exhaust timing valve 2, resulting in hindrance of the sliding of the valve 2. In order to eliminate or obviate this hindrance, a unit for self-cleaning the exhaust timing valve 2 at the engine starting time is incorporated in the exhaust timing changing system.

With the conventional exhaust timing changing system described, a timer circuit is arranged in a motor driving circuit of an actuator controller for driving and controlling the exhaust timing valve 2, and the timer circuit actuates the motor driving circuit means for about 1 to 2 seconds from the time immediately after the "ON" switching operation of an ignition switch to the starting of the engine operation. A motor is thus operated as an actuator for the exhaust timing valve to move forwardly or backwardly the exhaust timing valve 2 to thereby remove the carbon or the like sticked on the sliding surface of the exhaust timing valve 2.

However, in order to carry out self-cleaning operation for the exhaust timing valve described ablve, it is obliged to incorporate a specific or leased timer in the motor driving circuit means or externally thereof. The incorportion of the leased timer makes complicated the construction of the actuator controller and involves additional cost for the incorporation thereof.

### SUMMARY OF THE INVENTION

An object of this invention is to eliminate the defects encountered to the conventional technique described above and to provide a system for changing exhaust timing of an engine provided with an improved function for performing a self-cleaning operation of an exhaust timing valve with a simple structure of a control unit.

This and other objects can be acheived according to this invention by providing a system according to claim 1.

According to this exhaust timing changing system, during the checking of the lightening of the oil alarm lamp at a time when the ignition switch is set to the CHECK position, the actuator controller is operated to displace the exhaust timing valve forwardly or backwardly to thereby carry out the self-cleaning operation thereof. As described, the actuator controller is operatively connected to the oil alarm lamp checking circuit, so that the exhaust timing valve carries out the self-cleaning operation during the operation of the checking circuit. Thus, there is no need for the actuator controller to specifically incorporate a leased timer for the self-cleaning operation of the exhaust timing valve, whereby the structure of the actuator controller is made simple, thus reducing the production labour and cost thereof.

The preferred embodiments of this invention will be described further in detail hereunder with reference to the accompanying drawings.

### BRIEF DESCRIPTION OF THE DRAWINGS

In the accompanying drawings:
Fig. 1 shows a circuit diagram of an exhaust timing changing system according to this invention;
Fig. 2 shows a chart representing the current conducting conditions of an ignition switch unit of this invention;
Fig. 3 shows a cross section, partially imaginally shown, of an exhaust timing valve controlled by the circuit shown in Fig. 1; and
Fig. 4 is a view similar to that shown in Fig. 3, representing a conventional exhaust timing valve.

### DESCRIPTION OF THE PREFERRED EMBODIMENT

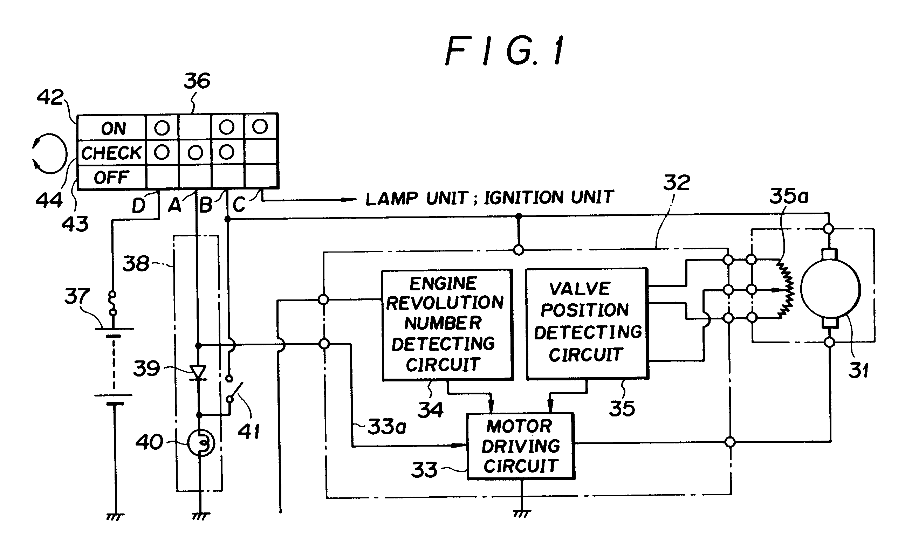

An embodiment of an exhaust timing changing system according to this invention will be described herewnder with reference to Figs. 1 to 3.

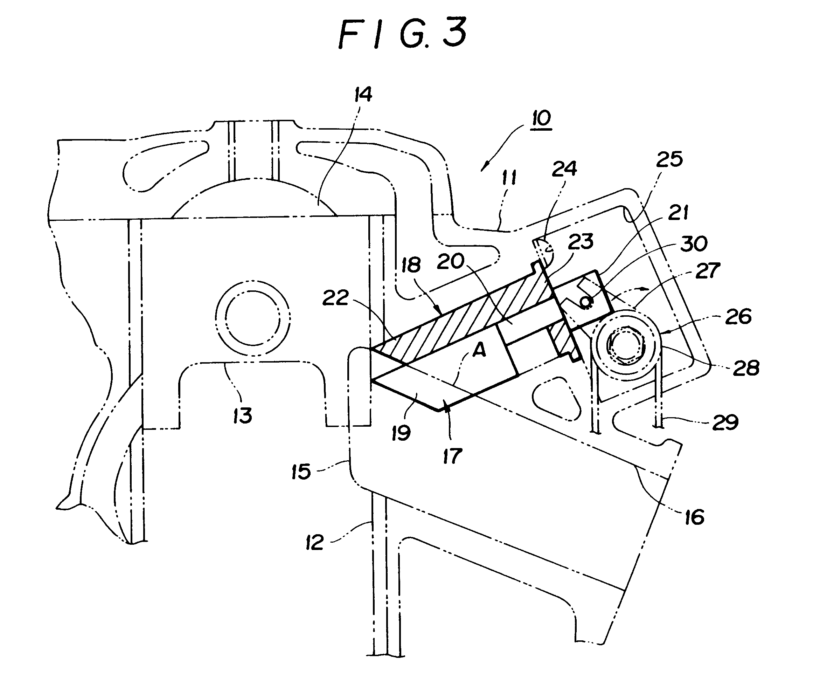

Referring to Fig. 3 showing the exhaust timing valve to be incorporated in an electric circuit arrangement of the exhaust timing changing system according to this invention, a two-cycle engine generally designated by reference numeral 10 includes a cylinder block 11 into which a cylinder 12 is mounted. A piston member 13 is slidably mounted in the cylinder 12. The side wall of the cylinder 12 is provided with a scavenge port, not shown, for introducing fresh air into a combustion chamber 14 and an exhaust port 15 for exhausting combustion gas burned in a combustion chamber 14, these ports being opened to the inner hollow portion of the cylinder 12. An exhaust passage 16 extends inwardly from the exhaust port 15.

Two sets of exhaust timing valves 17 and valve guides 18 are arranged to the cylinder block 11 above and in the vicinity of the upper portion of the exhaust port 15. Each of the exhaust timing valve 17 comprises operating member 19 slidably engaged with a guiding portion of the valve guide 18, a rod member 20 fitted in the inner portion of the valve guide 18 through an insertion end 23 thereof, and a stopping member 21 fitted and secured to the rod member 20. The valve guide 18 is secured to the cylinder block 11 by means of a fastening screw 24. According to, this construction, the exhaust timing valve 17 is guided forwardly or backwardly with respect to the exhaust port 15.

An operation chamber 25 is defined in the cylinder block 11, and within the operation chamber 25 are located the rod member 20 and the stopping member 21 of the exhaust timing valve 17, and an actuating mechanism 26, described hereinlater.

The actuating mechanism 26 comprises an actuating arm 27, a follower pulley 28 and a driving cable 29 which is stretched around the follower pulley 28 and a driving pulley, not shown, operatively coupled with an electric motor 31 in Fig. 1 as an actuator for the exhaust timing valve 17. The motor 31 is a reversible motor such as a stepping motor or survo-motor driven in accordance with the revolution numbers of the engine. The actuating arm 27 is coupled with the follower pulley 28 through a shaft member, not shown, and operatively engaged with a pin 30 secured to the stopping member 21 of the exhaust timing valve 17. With the actuating mechanism 26 thus constructed, when the engine is under the high speed rotation, the follower pulley 28 is positively rotated by the positive rotation of the motor 31 through the driving cable 29 to thereby rotate the actuating arm 27 in an arrowed direction and retract the exhaust timing valve 17 from the exhaust port 15 to a position in which the front surface of the valve 17 is overlapped with a surface of a discharge passage 16 shown by two-dot and dash lines A.

The operation of the motor 31 is controlled by an actuator controller 32, which compsises, as shown in Fig. 1, a circuit 33 for driving the motor 31, a circuit 34 for detecting the revolution numbers of the engine and a circuit 35 for detecting the position of the valve.

The motor driving circuit 33 serves to calculate an rotation angle of the engine in accordance with the revolution numbers of the engine in response to a signal detected by the engine revolution number detecting circuit 34 to thereby rotate the motor 31 by the rotation amounts in accordance with the detected revolution numbers of the engine. The rotation angle of the motor 31 is detected by the valve position detecting circuit 35 including a potentiometer 35a and a detected signal is transmitted into the motor driving circuit 33. Accordingly, the motor driving circuit 33 serves to drive positively or reversely the motor 31 in response to the position signal from the valve position detecting circuit 35 to thereby regulate or correct the displacement of the exhaust timing valve 17.

The actuator controller 32 generally comprising the motor driving circuit 33, the engine revolution number detecting circuit 34 and the valve position detecting circuit 35 is operatively connected to a battery 37 through an ignition switch 36. The motor driving circuit 33 is also connected to a circuit 38 for checking an oil alarm lamp through a wiring 33a.

The oil alarm lamp checking circuit 38 serves to flow an electric current from the battery 37 to a diode 39 and an oil alarm lamp 40 by the switching of the position of the ignition switch 36 before the starting of the engine operation to check a fact as to whether or not the oil alarm lamp is lightened. The circuit 38 includes an oil level switch 41 for detecting the level of the engine oil.

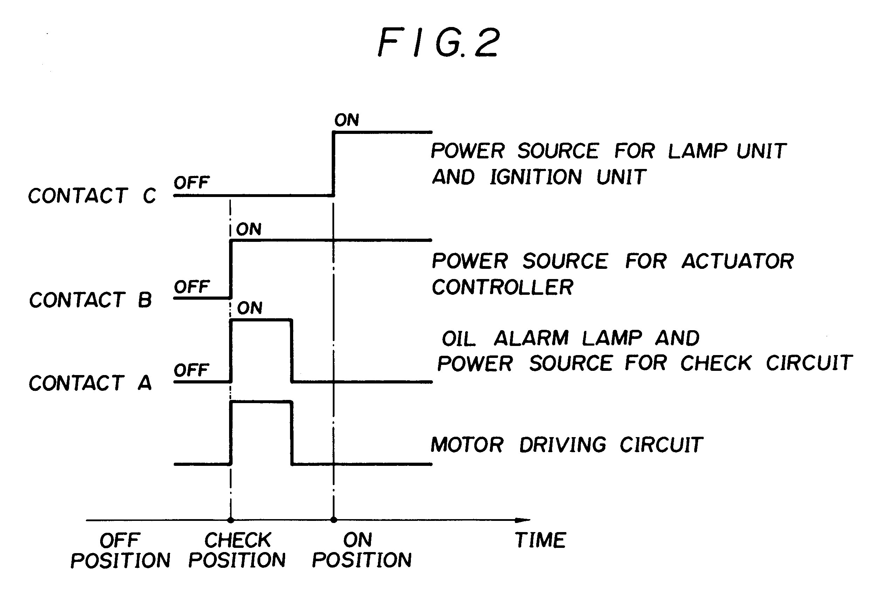

The ignition switch 36 is provided with four contact points A, B, C, and D. The contact point A is connected to the oil alarm lamp checking circuit 38, the contact point B is connected to the oil level switch 41, the actuator controller 32 and the motor 31, the contact point C is connected to a lamp unit and an ignition unit, and the contact point D is connected to the battery 37. The ignition switch 36 is further provided with an ON position 42, an OFF position 43 and a CHECK position 44 which is disposed at a neutral position in the rotating direction of the ignition switch 36 between the ON position 42 and the OFF position 43. The contact point D is not connected either to the contact points A, B and C in the OFF position 43 of the ignition switch 36. The contact point D is connected to the contact points A and B in the CHECK position 44 to enable, i.e. "ON" state the power sources of the actuator controller 32 and the oil alarm lamp checking circuit 38 as shown in Fig. 2. The contact point D is further connected to the contact points B and C in the ON position 42 to make "ON" state the power sources of the lamp unit and the lightening unit to maintain the "ON" state of the actuator controller 32.

The motor driving circuit 33 is connected to the oil alarm lamp checking circuit 38 through the wiring 33a for the signal transmission. Therfore, when the ignition switch 36 is set to the CHECK position 44 and the oil alarm lamp checking circuit 38 is operated, a signal representing the starting of the self-cleaning operation is transmitted into the motor driving circuit 33, which then serves to drive the motor 31 in the positive direction as shown in Fig. 2 and to forwardly move the exhaust timing valve 17 towards the exhaust port 15. The motor driving circuit 33 also serves to retract the exhaust timing valve 17 from the exhaust port 15 at the disapperance of the self-cleaning operation starting signal.

The operation of the embodiment according to this invention will be described hereunder.

The ignition switch 36 is first rotated from the OFF position 43 to the ON position 42 to start the engine. On the way of this rotation, the rotation of the ignition switch 36 is temporarily stopped at the CHECK position 44 to check or inspect the lightening of the oil alarm lamp 40 by passing the electric current through the check circuit 38. The signal for starting the operation of the self-cleaning of the valve 17 is transmitted to the motor driving circuit 33 through the wiring 33a during the inspection of the oil alarm lamp and the motor 31 is driven in the positive direction to forwardly move the exhaust timing valve 17 towards the exhaust port 15.

Upon the completion of the checking of the oil alarm lamp 40, the ignition switch 36 is rotated to set the same to the ON position 42. In advance of the setting to the ON position 42, the connection between the contact D and the contact A is released to thereby interrupt the currenting to the oil alarm lamp checking circuit 38. In response to this interruption, the transmission of the self-cleaning signal to the motor driving circuit 33 from the wiring 33a stops, and the motor 31 is then rotated reversely to retract the exhaust timing valve 17 from the exhaust port 15, whereby the self-cleaning operation for the exhaust timing valve 17 can be performed before the starting of the engine driving to thereby remove the carbon, for example, stuck on the surface of the valve 17. When the ignition switch 36 is set to the ON position 42, the electric current passes the lamp unit and the ignition unit to thereby start the engine.

As described, according to the embodiment of this invention, the ignition switch 36 is provided with the CHECK position 44 in addition to the ON and OFF positions 42 and 43. The oil alarm lamp checking circuit 38 is currented only at the time when the ignition switch 36 is set to the CHECK position 44, and only during this current conducting period, the self-cleaning signal is transmitted to the motor driving circuit 33, so that there is no need for the actuator controller 32 to locate any specific or leased timer for controlling the self-cleaning of the exhaust timing valve 17. This significantly makes compact the actuator controller and reduces the cost involved for locating the leased timer.

## Claims

1. A system for changing exhaust timing of a two stroke engine of the type comprising an exhaust timing valve disposed near an exhaust port of the engine to be movable forwardly or backwardly with respect to the exhaust port (15), a mechanism for operating the exhaust timing valve (17), a control unit (32) operatively connected to the operating mechanism to control the operation of the exhaust timing valve, an ignition switch unit operatively connected to the control unit, an oil alarm lamp checking unit operatively connected to the ignition switch unit for checking the lightening of an oil alarm lamp, and a power source operatively connected to the ignition switch unit and the oil alarm lamp checking unit, said exhaust timing changing system being characterised in that said ignition switch unit (36) is provided with an ON position (42) and OFF position (43) and a CHECK position (44), said CHECK position (44) being operatively connected to said oil alarm lamp checking circuit (38) only at a time when said ignition switch unit (36) takes said CHECK position (44), and said oil alarm lamp checking unit (38) is operatively connected to said control unit (32) so that said control unit (32) actuates said operating mechanism (26) to displace said exhaust timing valve (17) with respect to said exhaust port (15) when the ignition switch unit (36) is in the CHECK position (44), whereby a self-cleaning operation for said exhaust timing valve (17) is carried out.

2. An exhaust timing changing system according to claim 1, wherein said CHECK position (44) is arranged between said ON and OFF positions (42) and (43).

3. An exhaust timing changing system according to claim 1, wherein said control unit (32) includes an engine revolution number detecting circuit (34), a valve position detecting circuit (35) and a motor driving circuit (33) which is operatively connected to said oil alarm lamp checking unit (38) through a wiring (33a).

## Patentansprüche

1. Anordnung für veränderliche Auslaßzeiten für einen Zweitakt-Motor des Typs mit einem Auslaßsteuerzeiten-Ventil, das in der Nähe einer Auslaßventilkammer eines Motors angeordnet ist, um in Vorwärts und Rückwärts-Richtung bezüglich der Auslaßventilkammer (15) beweglich zu sein, einem Mechanismus zum Betreiben des Auslaßsteuerzeiten-Ventils (17), einer Steuerungseinheit (32), die betriebsmäßig mit dem betreibenden Mechanismus verbunden ist, um die Arbeitsweise des Auslaßsteuerzeiten-Ventils zu steuern, einer Zündungsschalteinheit, die betriebsmäßig mit der Steuerungseinheit verbunden ist, einer eine Ölalarmlampe überprüfende Einheit, die betriebsmäßig mit der Zündungsschalteinheit zum Überprüfen des Leuchtens einer Ölalarmlampe verbunden ist, und einer Spannungsquelle, die betriebsmäßig mit der Zündungsschalteinheit und der die Ölalarmlampe überprüfende Einheit verbunden ist, wobei die Anordnung für veränderliche Auslaßsteuerzeiten dadurch gekennzeichnet ist, daß die Zündungsschalteinheit (36) mit einer EIN-Position (42) und einer AUS-Position (43) und einer ÜBERPRÜFE-Position (44) ausgestattet ist, wobei die ÜBERPRÜFE-Position (44) betriebsmäßig mit der die Ölalarmlampe überprüfende Schaltung (38) nur zu einer Zeit verbunden ist, wenn die Zündungsschalteinheit (36) die ÜBERPRÜFE-Position (44) einnimmt, und daß die die Ölalarmlampe überprüfende Schaltung (38) betriebsmäßig mit der Steuerungseinheit (32) verbunden ist, so daß die Steuerungseinheit (32) den zu betreibenden Mechanismus (26) betätigt, um das Auslaßsteuerzeiten-Ventil (17) bezüglich der Auslaßventilkammer (15) zu verstellen, wenn sich die Zündungs-Schalteinheit (36) in der ÜBERPÜFE-Position (44) befindet, wodurch eine selbst-reinigende Arbeitsweise für das Auslaßsteuerzeiten-Ventil (17) durchgeführt wird.

2. Anordnung für veränderliche Auslaßzeiten nach Anspruch 1, worin die ÜBERPRÜFE-Position (44) zwischen der EIN- und der AUS-Position (42) und (43) angeordnet ist.

3. Anordnung für veränderliche Auslaßzeiten nach Anspruch 1, worin die Steuerungseinheit (32) eine Motordrehzahl dektektierende Schaltung (34), eine Ventilposition detektierende Schaltung (35) und eine Motoransteuerschaltung (33) beinhaltet, die betriebsmäßig mit der die Ölalarmlampe überprüfende Einheit (38) über eine Leitung (33a) verbunden ist.

## Revendications

1. Système pour modifier la durée d'échappement d'un moteur à deux temps du type comprenant une vanne de durée d'échappement disposée près d'un orifice d'échappement du moteur pour être déplaçable vers l'avant ou vers l'arrière par rapport à l'orifice d'échappement (15), un mécanisme pour faire fonctionner la vanne de durée d'échappement (17), une unité de commande (32) reliée de manière opérationnelle au mécanisme de fonctionnement pour commander le fonctionnement de la vanne de durée d'échappement, une unité de commutateur d'allumage reliée de manière opérationnelle à l'unité de commande, une unité de vérification de voyant d'alarme d'huile reliée de manière opérationnelle à l'unité de commutateur d'allumage pour vérifier l'éclairage d'un voyant d'alarme d'huile, et une source de courant reliée de manière opérationnelle à l'unité de commutateur d'allumage et à l'unité de vérification de voyant d'alarme d'huile, ledit système pour modifier la durée d'échappement étant caractérisé en ce que ladite unité de commutateur d'allumage (36) est pourvue d'une position ON (42) et d'une position OFF (43) et d'une position CHECK (44), ladite position CHECK (44) étant reliée de manière opérationnelle audit circuit (38) de vérification de voyant d'alarme d'huile seulement au moment où ladite unité de commutateur d'allumage (36) prend ladite position CHECK (44), et ladite unité (38) de vérification de voyant d'alarme d'huile est reliée de manière opérationnelle à ladite unité de commande (32) de façon à ce que ladite unité de commande (32) actionne ledit mécanisme de fonctionnement (26) pour déplacer ladite vanne de durée d'échappement (17) par rapport audit orifice d'échappement (15) quand l'unité de commutateur d'allumage (36) est sur la position CHECK (44), ce par quoi une opération d'autonettoyage pour ladite vanne de durée d'échappement (17) est menée à bonne fin.

2. Système pour modifier la durée d'échappement selon la revendication 1, dans lequel ladite position CHECK (44) est située entre lesdites positions ON et OFF (42) et (43).

3. Système pour modifier la durée d'échappement selon la revendication 1, dans lequel ladite unité de commande (32) comprend un circuit (34) de détection de nombre de tours de moteur à deux temps, un circuit (35) de détection de position de vanne et un circuit (33) de pilotage de moteur qui est relié de manière opérationnelle à ladite unité de vérification de voyant d'alarme d'huile (38) au moyen d'un câblage (33a).
